# EUROPÄISCHE PATENTANMELDUNG

(11) **EP 3 587 161 A1**
(43) Veröffentlichungstag der Anmeldung: **01.01.2020**
(21) Anmeldenummer: 18180354.5
(22) Anmeldetag: 28.06.2018
(51) Int. Cl.: B60K 25/08

(54) **MECHANISCHER ENERGIESPEICHER FÜR FAHRZEUGE**

(71) Anmelder: Seiler, Hans Jörg, 8122 ZH Binz (CH)
(72) Erfinder: Seiler, Hans Jörg, 8122 ZH Binz (CH)
(74) Vertreter: Kasche, André

(57) **Zusammenfassung**

Die vorliegende Erfindung betrifft eine Vorrichtung umfassend einen mechanischen Energiespeicher, optional in Form einer Feder oder eines Elastikbands, der bzw. das einem beweglichen rotierenden Teil eines Fahrzeugantriebs, optional einer Antriebswelle, einem Reifen oder einem Rad, zugeordnet ist, dadurch gekennzeichnet, dass der mechanische Energiespeicher durch Rotieren des beweglichen Teils Energie aufnehmen und speichern kann.

## Beschreibung

Die vorliegende Erfindung betrifft eine Vorrichtung umfassend einen mechanischen Energiespeicher, optional in Form einer Feder oder eines Elastikbands, der bzw. das einem beweglichen rotierenden Teil eines Fahrzeugantriebs, optional einer Antriebswelle, einem Reifen oder einem Rad, zugeordnet ist, dadurch gekennzeichnet, dass der mechanische Energiespeicher durch Rotieren des beweglichen Teils Energie aufnehmen und speichern kann.

### Stand der Technik

Die Energieausnutzung bzw. Rückgewinnung steht bei der Automobilentwicklung immer mehr im Vordergrund. Beispielsweise wird die beim Verzögern eines Fahrzeugs zur Verfügung stehende Energie rückgewonnen und der Fahrzeugbatterie zugeführt.

Die EP 2 338 697 A1 offenbart einen Gummireifen umfassend einen Dien-Gummi und Kohlenstoffnanoröhrchen, die Strom produzieren.

EP 16 177 908 A1 beschreibt einen schlauchförmigen Radeinsatz aus Kohlenstoffnanoröhrchen, die elektrische Energie und/oder Wärmeenergie ableitbar erzeugen.

Einige Automobilhersteller nutzen elektrische Energie, um den kraftstoffintensiven Anfahrprozess mittels Elektromotoren zu optimieren oder setzen einen entsprechend leistungsgesteigerten Anlasser zum Anfahren ein.

Angesichts des grundsätzlichen Wunsches, Kraftfahrzeuge mit möglichst wenig Energie zu betreiben, besteht ein grosses Interesse an der Weiterentwicklung von Energieeinsparungsmöglichkeiten.

Es ist die Aufgabe der vorliegenden Erfindung den Energieverbrauch von Kraftfahrzeugen zu optimieren.

Diese Aufgabe wird mittels einer Vorrichtung gelöst, die einen mechanischen Energiespeicher, optional eine Feder oder ein Elastikband, umfasst, der bzw. das einem beweglichen rotierenden Teil eines Fahrzeugantriebs, optional einer Antriebswelle, einem Reifen oder einem Rad, zugeordnet ist, und dadurch gekennzeichnet ist, dass der mechanische Energiespeicher durch Rotieren des beweglichen Teils Energie aufnehmen und speichern kann.

Ein mechanischer Energiespeicher im Sinne der vorliegenden Erfindung ist jeglicher Speicher, der geeignet ist, kinetische Energie und/oder potentielle Energie abrufbar zu speichern. Beispielsweise kann der mechanische Energiespeicher jeglicher sein, der die Energie aus der Drehbewegung eines rotierenden Teils oder mehrerer rotierender Teile eines Fahrzeugantriebs in Form kinetischer und/oder potentieller Energie speichern kann. Der mechanische Energiespeicher kann beispielsweise ausgewählt sein aus der Gruppe bestehend aus einem Schwungradspeicher, einer Feder, optional einer Spiralfeder, einer Stab- oder Torsionsfeder, einer Tellerfeder, einer Schraubenfeder oder einer Evolutfeder, einem Elastikband, einem Druck(gas)speicher und einer Gummifeder.

Die Vorrichtung der Erfindung kann einem Fahrzeugantrieb für jegliche Form eines Fahrzeugs zugeordnet sein, beispielsweise eines Zweirads, optional eines Fahrrads oder eines Motorrads, eines Motorkraftahrzeugs, optional eines Elektro- oder Hybridfahrzeugs, eines Schienenfahrzeugs, optional eines Zuges oder einer Strassenbahn, eines Schiffs oder jedem Fahrzeug zugeordnet sein, das über rotierende Antriebselemente verfügt. Der Begriff Fahrzeug schliesst auch Flugzeuge mit ein.

Der mechanische Energiespeicher ist dem rotierenden Teil eines Fahrzeugantriebs so zugeordnet, dass die Rotationsenergie des rotierenden Teils auf den mechanischen Energiespeicher übertragen, gespeichert und wieder abgegeben werden kann.

Beispielsweise wird wenigstens ein Teil der Energie des rotierenden Teils eines Fahrzeugantriebs während der Fortbewegung des Fahrzeugs an den mechanischen Energiespeicher übertragen und darin gespeichert. Optional kann die Energie aus dem mechanischen Energiespeicher erst bei stillstehendem Fahrzeug genutzt werden, z.B. zum Betreiben von elektrischen Verbrauchern oder zum Laden einer Batterie. Alternativ oder zusätzlich kann die im mechanischen Energiespeicher gespeicherte Energie beim Anfahren oder Beschleunigen des Fahrzeuges genutzt werden, z.B. indem die Energie in Strom umgewandelt wird und einen Elektromotor betreibt, oder indem die gespeicherte Energie direkt an den Fahrzeugantrieb abgegeben wird. Ferner oder alternativ kann die im mechanischen Energiespeicher gespeicherte Energie z.B. im Langsamverkehr, z.B. bei Geschwindigkeiten bis 30 oder bis 50 km/h, oder beim Fahren mit konstanter Geschwindigkeit genutzt werden, z.B. indem die Energie in Strom umgewandelt wird und einen Elektromotor betreibt, oder indem die gespeicherte Energie direkt an den Fahrzeugantrieb abgegeben wird und/oder der Hauptantrieb des Fahrzeugs, z.B. der Verbrennungsmotor, ausgeschaltet oder mit weniger Energie bzw. mit weniger Kraftstoff betrieben wird.

Es kann zudem vorteilhaft sein, den mechanischen Energiespeicher insbesondere oder nur dann zu laden, wenn das Fahrzeug gebremst wird oder sich im Schiebebetrieb befindet.

Der rotierende Teil eines Fahrzeugantriebs kann jeder Antriebsteil des Fahrzeuges sein, der rotiert. Beispielsweise kann der rotierende Teil ein Rad, Reifen, Fahrwerks- oder Motorenteil sein, z.B. eine Kurbelwelle oder eine andere rotierende Welle eines Motors, eine Kardanwelle, eine Achsantriebswelle, ein Radlager, eine Schiffsschraube, eine Turbinen- oder Propellerwelle.

Das Speichern von Energie im mechanischen Energiespeicher und das Abgeben der gespeicherten Energie, z.B. im Stillstand oder beim Anfahren, kann erheblich zur Reduktion des Energieverbrauchs des Fahrzeuges beitragen.

In einer Ausführungsform der Vorrichtung kann der mechanische Energiespeicher einen Stromgenerator oder einen mechanischen Fahrzeugantrieb antreiben.

Die im mechanischen Energiespeicher gespeicherte Energie kann genutzt werden, indem sie an einen Stromgenerator abgegeben und in elektrische Energie umgewandelt wird, oder indem sie dem mechanischen Fahrzeugantrieb zur Fortbewegung des Fahrzeugs zugeführt wird.

In einer Ausführungsform umfasst die erfindungsgemässe Vorrichtung zusätzlich einen Stromgenerator, der dem mechanischen Energiespeicher zugeordnet ist und dessen mechanische Energie in Strom umwandeln kann. Der Stromgenerator kann die optional bereits im Fahrzeug vorhandene Lichtmaschine oder ein zusätzlicher Stromgenerator sein, der für die Umwandlung der im mechanischen Energiespeicher gespeicherten Energie in elektrische Energie ausgelegt ist.

In einer Ausführungsform weist die Vorrichtung zwei oder mehr mechanische Energiespeicher auf, von denen wenigstens ein Energiespeicher einem beweglichen rotierenden Teil eines Fahrzeugantriebs zugeordnet ist. Beispielsweise kann jedem beweglichen rotierenden Teil eines Fahrzeugantriebs ein mechanischer Energiespeicher zugeordnet sein. Beispielsweise kann die Grösse und/oder Kapazität der mechanischen Energiespeicher der Drehzahl und/oder Kraft des jeweiligen rotierenden Teils angepasst sein.

In einer Ausführungsform sind ein oder mehrere mechanische Energiespeicher einander zugeordnet und mechanische Energie kann von einem Energiespeicher auf einen oder mehrere andere Energiespeicher übertragen werden. Beispielsweise kann ein erster mechanischer Energiespeicher einem beweglichen rotierenden Teil eines Fahrzeugantriebs zugeordnet sein und die gespeicherte Energie auf einen weiteren oder mehrere weitere mechanische Energiespeicher übertragen, die alle dem ersten zugeordnet oder alle in Serie zu einander angeordnet sind. Es ist im Sinne der Erfindung, dass eine parallel oder in Reihe geschaltete Vielzahl an Energiespeichern die Energie beispielsweise speichern und wieder untereinander, an einen Stromgenerator oder an einen mechanischen Fahrzeugantrieb abgeben kann.

In einer Ausführungsform umfasst der Stromgenerator zur Verwendung in der erfindungsgemässen Vorrichtung ein Nanotechmaterial, optional Kohlenstoffnanoröhrchen, das durch Bewegung, optional Rotieren elektrische und/oder thermische Energie erzeugen kann.

Der Stromgenerator zur Verwendung in der erfindungsgemässen Vorrichtung, optional umfassend Nanotechmaterial, kann, beispielsweise, mit einem rotierenden Teil eines Fahrzeugantriebs koppel- und entkoppelbar sein, sodass der Stromgenerator mit dem rotierenden Teil eines Fahrzeugantriebs in Fahrt gekoppelt ist, sich dreht und Energie erzeugt und/oder, z.B. im Stillstand des Fahrzeugs, vom rotierenden Teil eines Fahrzeugantriebs entkoppelt ist und vom mechanischen Energiespeicher zur Energieerzeugung angetrieben wird.

Der Stromgenerator zur Verwendung in der erfindungsgemässen Vorrichtung umfassend Nanotechmaterial kann, beispielsweise, als ringförmiger Schlauch dem rotierenden Teil eines Fahrzeugantriebs zugeordnet sein, wobei der Schlauch umfassend die Nanotechmaterialien durch eine Drehbewegung elektrische und/oder thermische Energie erzeugt.

In einer Ausführungsform umfasst die Vorrichtung einen beweglichen rotierenden Teil eines Fahrzeugantriebs, optional eine Antriebswelle, einen Reifen, einen schlauchförmigen Radeinsatz oder eine Radfelge, in der oder in dem das Nanotechmaterial vorliegt.

Beispielsweise kann der schlauchförmige Radeinsatz mit Luft, Gasen oder Flüssigkeiten befüllbar sein und aus Nanotech-Materialien, vorzugsweise Kohlenstoffnanoröhrchen, bestehen bzw. diese enthalten und/oder damit beschichtet sein, und die Nanotech-Materialien können elektrische Energie und/oder Wärmeenergie erzeugen und diese Energie nutzbar vom schlauchförmigen Radeinsatz ableiten.

Der schlauchförmige mit Luft, Gasen oder Flüssigkeiten befüllbare Radeinsatz sollte für die Anforderungen der vorgesehenen Reifenbelastung geeignet sein. Die Nanotechmaterialien zur mechanoelektrischen und/oder thermoelektrischen Energieumwandlung werden auch intelligente Werkstoffe bzw. Smart Materials genannt und haben eine aussergewöhnliche elektrische Leitfähigkeit.

In einer Ausführungsform betrifft die vorliegende Erfindung eine Vorrichtung, wobei das Nanotechmaterial elektrische und/oder thermische Energie mittels
(i) einer Drehbewegung des rotierenden Teils des Fahrzeugantriebs, optional der Antriebswelle, des Rads, des schlauchförmigen Radeinsatzes und/oder der Radfelge,
(ii) einer mechanischen und/oder thermischen Einwirkung auf den rotierenden Teil des Fahrzeugantriebs, optional auf die Antriebswelle, auf das Rad, auf den schlauchförmigen Radeinsatz und/oder auf die Radfelge, und/oder
(iii) einer Energieübertagung aus dem mechanischen Energiespeicher erzeugen kann.

Die gegenwärtige Erfindung betrifft auch jegliche Fahrzeuge, welche die oben genannten Vorrichtungen umfassen.

Im Folgenden wird die Erfindung beispielhaft anhand einer bevorzugten Ausführungsform einer erfindungsgemässen Vorrichtung beschrieben.

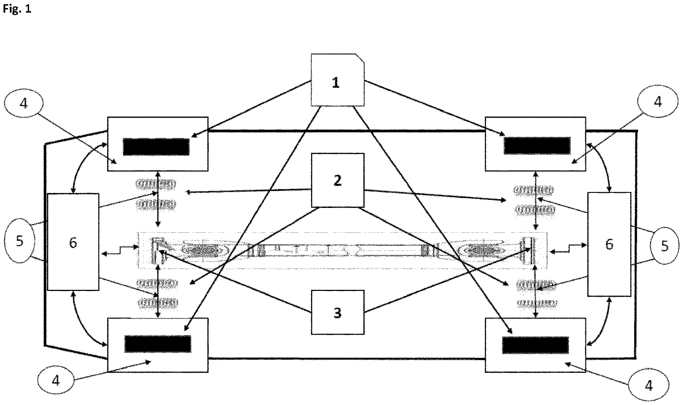

Die Figur 1 zeigt eine mögliche Anordnung verschiedener Merkmale der erfindungsgemässen Vorrichtung in einem Fahrzeug.
(1) Stromgenerator
(2) mechanischer Energiespeicher
(3) beweglicher rotierender Teil eines Fahrzeugantriebs
(4) Rad/Reifen
(5) Energieübertragung
(6) Elektromotor

Ein oder mehrere mechanische Energiespeicher (2), z.B. Feder(n), ist/sind dem beweglichen rotierenden Teil eines Fahrzeugantriebs (3), z.B. der Kardan- oder Antriebswelle, so zugeordnet, dass die mechanische Energie vom rotierenden Teil (3) auf den mechanischen Energiespeicher (2) übertragen wird und vom mechanischen Energiespeicher (2) gespeichert werden kann. Die Energieübertragung (5) vom rotierenden Teil (3) auf den mechanischen Energiespeicher (2) kann, z.B., während der Fahrt, während eines Bremsvorgangs oder im Schiebebetrieb erfolgen. Der mechanische Energiespeicher kann die gespeicherte Energie anschliessend, z.B. im Stillstand des Fahrzeugs, während des Anfahrens oder bei einer Konstantfahrt, z.B. bis 50 km/h, entweder (A) direkt an den mechanischen Fahrzeugantrieb zur Fortbewegung, z.B. an ein rotierendes Teil eines Fahrzeugantriebs (3), z.B. der Kardan- oder Antriebswelle abgeben, oder (B) die gespeicherte Energie an einen oder mehrere Stromgenerator(en) (1) übertragen. Der Stromgenerator (1) kann, z.B., eine Lichtmaschine des Fahrzeuges sein, oder er kann ein Nanotechmaterial, optional Kohlenstoffnanoröhrchen umfassen, das durch Bewegung, optional Rotieren, elektrische und/oder thermische Energie erzeugen kann. Beispielsweise kann der Stromgenerator (1) ein schlauchförmiger Radeinsatz umfassend Nanotechmaterial sein, der einem Rad/Reifen (4) eines Fahrzeuges zugeordnet ist. Zusätzlich können Deformationen des schlauchförmigen Radeinsatzes während der Rotation des Rads/Reifens (4) zu elektrischer Spannung führen, die ebenfalls in Form von elektrischer Energie für die Fortbewegung genutzt werden kann, und/oder, z.B., in einer Batterie gespeichert werden kann. Die elektrische Energie, die vom Stromgenerator (1) erzeugt wird, kann entweder in einer Batterie gespeichert werden, und/oder direkt an einen oder mehrere Elektromotoren (6) (siehe Pfeil zwischen (1) und (6)) abgegeben werden, die wiederum den mechanischen Fahrzeugantrieb zur Fortbewegung, z.B. ein Rad/Reifen (4), oder ein rotierendes Teil eines Fahrzeugantriebs (3), z.B. Kardan- oder Antriebswelle antreiben.

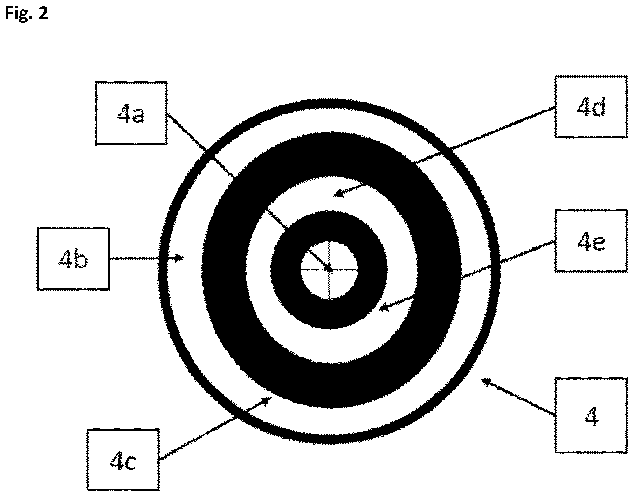

Die Figur 2 zeigt eine mögliche Ausführungsform der Erfindung, in welcher der Stromgenerator (1) ein schlauchförmiger Radeinsatz umfassend Nanotechmaterial ist.
(4a) Radachse
(4b) Reifen
(4c) schlauchförmiger Radeinsatz
(4d) Felge
(4e) Kontaktfläche zur Energieübertragung

In einer Ausführungsform der gegenwärtigen Erfindung wird die gespeicherte Energie des mechanischen Energiespeichers an einen Stromgenerator im Rad/Reifen (4) abgegeben. Dazu kann der Stromgenerator (1) ein schlauchförmiger Radeinsatz (4c) sein, welcher Nanotechmaterial umfasst. In Blickrichtung der Radachse (4a) befindet sich der Radeinsatz (4c) umfassend Nanotechmaterial zwischen dem Reifen (4b) und der Felge (4d) des Rades (4). Der Radeinsatz (4c) kann von der Drehbewegung des Rads/ des Reifens (4) koppel- und entkoppelbar sein. Z.B. ist es vorgesehen, dass der Radeinsatz (4c) während der Fahrt mit dem Rad/Reifen gekoppelt ist und sich dreht. Durch Deformation und/oder Rotation kann das Nanotechmaterial des Radeinsatzes (4c) elektrische Energie erzeugen. Beispielsweiser kann ein elektrischer Leiter, optional ein Kabel oder Stecker, zur Übertragung der elektrischen Spannung, bzw. Strom, Energie und Wärme zwischen den Nanotech-Materialien und der Kontaktfläche (8) zur Energieübertragung dienen. Die optionale Kontaktfläche (8) dient zur Übertragung des Stroms, der Energie und/oder der Wärme, vorzugsweise an Speichermedien wie Batterien / Akkumulatoren oder direkt an einen Elektromotor. Im Stillstand oder bei geringer Geschwindigkeit kann der Radeinsatz (4c) vom Rad/Reifen (4) entkoppelt und vom mechanischen Energiespeicher (2) zur Rotation angetrieben werden, wobei das Nanotechmaterial des Radeinsatzes (4c) elektrische Energie erzeugt.

## Patentansprüche

1. Eine Vorrichtung umfassend einen mechanischen Energiespeicher (2), optional eine Feder oder ein Elastikband, der bzw. das einem beweglichen rotierenden Teil eines Fahrzeugantriebs (3), optional einer Antriebswelle, einem Reifen (4b) oder einem Rad (4), zugeordnet ist,
**dadurch gekennzeichnet, dass** der mechanische Energiespeicher (2) durch Rotieren des beweglichen Teils (3) Energie aufnehmen und speichern kann.

2. Die Vorrichtung nach Anspruch 1, wobei der mechanische Energiespeicher einen Stromgenerator (1) oder einen mechanischen Fahrzeugantrieb antreiben kann.

3. Die Vorrichtung nach Anspruch 1 oder 2, wobei die Vorrichtung zusätzlich einen Stromgenerator (1) umfasst, der dem mechanischen Energiespeicher (2) zugeordnet ist und dessen mechanische Energie in Strom umwandeln kann.

4. Die Vorrichtung nach einem der Ansprüche 1 bis 3, wobei die Vorrichtung zwei oder mehr mechanische Energiespeicher (2) aufweist, von denen wenigstens ein Energiespeicher einem beweglichen rotierenden Teil eines Fahrzeugantriebs (3) zugeordnet ist.

5. Die Vorrichtung nach Anspruch 4, wobei ein oder mehrere mechanische Energiespeicher (2) einander zugeordnet sind und mechanische Energie von einem Energiespeicher (2) auf einen oder mehrere andere Energiespeicher (2) übertragen werden kann.

6. Die Vorrichtung nach einem der Ansprüche 3 bis 5, wobei der Stromgenerator (1) ein Nanotechmaterial, optional Kohlenstoffnanoröhrchen umfasst, das durch Bewegung, optional Rotieren elektrische und/oder thermische Energie erzeugen kann.

7. Die Vorrichtung nach Anspruch 6, wobei die Vorrichtung einen beweglichen rotierenden Teil eines Fahrzeugantriebs (3), optional eine Antriebswelle, einen Reifen (4b), einen schlauchförmigen Radeinsatz (4c) oder eine Radfelge (4d) umfasst, in der oder in dem das Nanotechmaterial vorliegt.

8. Die Vorrichtung nach Anspruch 7, wobei das Nanotechmaterial elektrische und/oder thermische Energie mittels
(i) einer Drehbewegung des rotierenden Teils des Fahrzeugantriebs (3), optional der Antriebswelle, des Rads (4), des schlauchförmigen Radeinsatzes (4c) und/oder der Radfelge (4d),
(ii) einer mechanischen und/oder thermischen Einwirkung auf den rotierenden Teil des Fahrzeugantriebs (3), optional auf die Antriebswelle, auf das Rad (4), auf den schlauchförmigen Radeinsatz (4c) und/oder auf die Radfelge (4d), und/oder
(iii) einer Energieübertagung aus dem mechanischen Energiespeicher (2) erzeugen kann.
